(19) Europäisches Patentamt
European Patent Office
Office européen des brevets

(11) Numéro de publication : **0 335 810 B1**

(12) # FASCICULE DE BREVET EUROPEEN

(45) Date de publication du fascicule du brevet :
08.05.91 Bulletin 91/19

(51) Int. Cl.⁵ : **F16B 12/50, A47B 33/00**

(21) Numéro de dépôt : 89420112.8

(22) Date de dépôt : 29.03.89

(54) Assemblage de coin pour table de découpe.

(30) Priorité : 29.03.88 FR 8804482

(43) Date de publication de la demande :
04.10.89 Bulletin 89/40

(45) Mention de la délivrance du brevet :
08.05.91 Bulletin 91/19

(84) Etats contractants désignés :
BE DE ES FR GB IT

(56) Documents cités :
FR-A- 2 267 067
FR-A- 2 579 074
GB-A- 1 010 864
US-A- 3 964 404
US-A- 3 981 251

(73) Titulaire : **Terraillon**
**Route de Thonon Juvigny**
**F-74100 Annemasse (FR)**

(72) Inventeur : **Dechelette, Eric**
**Uchisy**
**F-71700 Tournus (FR)**
Inventeur : **Pichet, Jean-Marc**
**En Bout**
**F-71700 Tournus (FR)**

(74) Mandataire : **de Beaumont, Michel**
**Cabinet Poncet 7, chemin de Tillier B.P. 317**
**F-74008 Annecy Cédex (FR)**

Jouve, 18, rue Saint-Denis, 75001 PARIS

## Description

La présente invention concerne les tables de découpe, comprenant un plateau supérieur en une matière adéquate sur laquelle on peut découper de la viande ou d'autres nourritures. Ces tables sont couramment utilisées dans les boucheries, les charcuteries, les cuisines de restaurants ou de collectivités.

Dans les tables de découpe connues, le plateau supérieur est posé sur un chassis. Le chassis comprend des tubes d'encadrement, formant un cadre sensiblement rectangulaire. A chaque angle où se raccordent deux tubes d'encadrement adjacents, on solidarise un tube de pied, perpendiculaire aux deux tubes d'encadrement. Le plateau supérieur doit être maintenu par des taquets d'arrêt, solidaires du cadre, et définissant des butées latérales contre lesquelles viennent porter les bords du plateau supérieur.

Une solution classique consiste à réaliser un cadre mécano-soudé, sur lequel on soude des taquets d'arrêt, et sur lequel on soude également des tubes de pied. Cette solution conduit à multiplier le nombre de soudures à réaliser. Pour une production industrielle d'une gamme complète de tables de dimensions différentes, il faut disposer de stocks importants de tables de découpe entièrement constituées.

On a également proposé une autre solution dans laquelle les tubes de pied sont amovibles. Dans cette solution, une pièce de liaison en métal moulé, est sertie dans les tubes d'encadrement, et relie ainsi deux tubes successifs. La pièce comporte également des taquets d'arrêt, et des moyens de fixation et d'adaptation d'un tube de pied.

Une telle solution présente de nombreux inconvénients, et notamment : la liaison sertie entre la pièce de liaison et les tubes d'encadrement constitue une liaison peu fiable, qui tend à présenter un jeu ; le sertissage est une technique onéreuse, d'autant que les pièces ont des formes relativement complexes et que le sertissage demande une certaine précision ; la pièce de liaison, réalisée en métal moulé, ne s'adapte généralement pas parfaitement aux extrémités des tubes d'encadrement, et il en résulte l'existence de nids à salissures, qui sont inacceptables pour des utilisations dans les cuisines de collectivités. Egalement, le fait que la pièce de liaison soit réalisée en un métal moulé nécessite des investissements relativement importants.

Le document FR-A-2 267 067 décrit une armature métallique pour la réalisation de tables dans laquelle l'assemblage de coin est assuré par une pièce de raccordement des deux tubes d'encadrement adjacents, cette pièce de raccordement comportant une tablette supérieure horizontale délimitée par une arête intérieure oblique et deux côtés perpendiculaires l'un à l'autre, la tablette supérieure se raccordant par l'arête intérieure oblique à une paroi d'assemblage verticale oblique dont les bords verticaux sont en appui sur les parois latérales intérieures des tubes d'encadrement ; la paroi d'assemblage comprend au moins un trou pour le passage de vis d'assemblage obliques destinées à pénétrer dans un alésage taraudé du tube de pied. L'extrémité inférieure de la paroi d'assemblage verticale oblique se raccorde à une ailette inférieure de longueur supérieure à la tablette supérieure, les deux extrémités de l'ailette inférieure étant destinée à être soudées sur les faces inférieures des tubes d'encadrement. Une telle structure d'assemblage de coin présente l'inconvénient de manquer de rigidité, notamment dans l'état démonté de la table lorsque les tubes de pied sont séparés du cadre. En effet, les tubes d'encadrement sont alors reliés par les seules tablettes inférieures auxquels ils sont soudés, et qui n'assurent pas un assemblage très rigide. En outre, le passage des vis d'assemblages obliques traversant les trous des parois d'assemblages nécessite le perçage des tubes d'encadrement, ainsi que le perçage des tubes de pied, ce qui rend l'assemblage relativement complexe. Egalement, il apparait que l'assemblage du tube de pied sur le cadre ainsi formé n'est pas suffisamment rigide, et les vis obliques d'assemblage reprennent la totalité des efforts verticaux entre le tube de pied et le cadre, de sorte qu'un jeu inacceptable apparait à la longue lors de l'utilisation et accentue le manque de rigidité de la table. En outre, le dispositif n'est pas véritablement adapté à une utilisation dans les collectivités, car il subsiste un certain nombre d'interstices au niveau de l'assemblage de coin, interstices qui sont des nids à salissures. En particulier, l'extrémité supérieure du tube de pied n'est pas obturée, et reste susceptible de recevoir des déchets alimentaires qui se décomposent et dégradent les conditions d'hygiène. Dans ce document, aucun moyen n'est prévu pour adapter des taquets d'arrêt du plateau de découpe posé sur le cadre.

La présente invention a notamment pour objet d'éviter les inconvénients des solutions connues, en proposant une nouvelle structure d'assemblage de coin pour chassis tubulaire de tables de découpe, cette nouvelle structure permettant l'adaptation amovible de tubes de pied, mais ne nécessitant pas l'utilisation d'une pièce de coin en métal moulé ; cette solution évite également l'utilisation d'une liaison par sertissage. La solution selon l'invention conduit à des réalisations particulièrement simples de l'assemblage de coin, ne nécessitant pas d'investissements importants, et réalisant un assemblage particulièrement rigide, robuste sans nécessiter de moyens d'assemblage de grande précision. En particulier, l'assemblage de coin selon l'invention est très rigide, et évite l'apparition ultérieure de jeux consécutifs à un usage prolongé. Pour cela, les vis d'assemblage sont associées à des éléments robustes évitant qu'elles aient à reprendre par elles-mêmes les efforts verticaux entre les tubes de pied et le cadre, lesdits effort étant repris par les éléments robustes. La structure particulière évite l'apparition d'interstices entre les éléments assemblés. Les assemblages sont en partie réalisés par soudure d'éléments bord à bord, selon une disposition particulièrement rigide et résistante et qui cependant présente des longueurs de soudure relativement faibles, les zones de soudure étant bien accessibles. L'assemblage de coin selon l'invention permet en outre l'adaptation des taquets d'arrêt, sans nécessiter d'éléments supplémentaires.

Pour atteindre ces objets ainsi que d'autres, l'assemblage selon la présente invention consiste à utiliser une pièce de raccordement de forme particulière, réalisée à partir d'une feuille de métal découpée et pliée, la pièce de raccordement étant solidarisée par soudure aux deux tubes d'encadrement qu'elle relie. La pièce de raccordement comporte une tablette supérieure se raccordant, par une arête intérieure oblique, à une paroi d'assemblage verticale oblique. Les bords latéraux de la paroi d'assemblage se raccordent aux parois intérieures des deux tubes d'encadrement. Les bords intérieurs verticaux des tubes d'encadrement sont écartés pour laisser le passage d'au moins une vis d'assemblage oblique traversant un trou de la paroi d'assemblage et destinée à pénétrer dans un alésage taraudé du tube de pied. Le tube de pied comporte une section suffisamment importante pour constituer des surfaces d'appui venant obturer entièrement les extrémités des tubes d'encadrement. Les tubes d'encadrement sont solidarisés à la pièce de raccordement par soudure. Dans la zone opposée à l'arête intérieure oblique, et définie par la distance séparant les deux tubes d'encadrement, la tablette supérieure se raccorde à un plateau supérieur constituant une surface d'appui et d'obturation du tube de pied. Ainsi, le plateau supérieur ferme l'extrémité supérieure du tube de pied, et constitue une surface contre laquelle cette extrémité supérieure de tube de pied vient en appui pour reprendre les efforts verticaux. Une telle structure peut être adaptée à des tubes d'encadrement et de pied à section quelconque, par exemple à section ronde. Toutefois, les formes des pièces, et notamment de la pièce de raccordement, sont plus simples lorsque l'on utilise des tubes d'encadrement dont la section est rectangulaire, et des tubes de pied dont la section est également rectangulaire, de préférence carrée.

Selon un mode de réalisation, les bords adjacents du plateau supérieur et de la tablette supérieure de la pièce de raccordement forment des découpes à angle droit dans lesquelles les faces supérieures des tubes d'encadrement se raccordent bord à bord et sont soudées.

D'autres objets, caractéristiques et avantages de la présente invention ressortiront de la description suivante de modes de réalisation particuliers, faite en relation avec les figures jointes, parmi lesquelles :
 – la figure 1 représente une vue de dessus d'un assemblage de coin selon la présente invention ;
 – la figure 2 représente une vue de face d'un assemblage de coin selon la présente invention, dans lequel le tube de pied a été enlevé ;
 – la figure 3 représente une vue de dessous de l'assemblage de coin de la figure 1 ;
 – la figure 4 représente une vue de face d'un assemblage de coin selon la présente invention, avec un tube de pied et un plateau supérieur ;
 – la figure 5 représente une vue de dessus de l'assemblage de la figure 1 en coupe selon le plan A-A ; et
 – la figure 6 représente une vue en perspective d'une pièce de raccordement selon la présente invention.

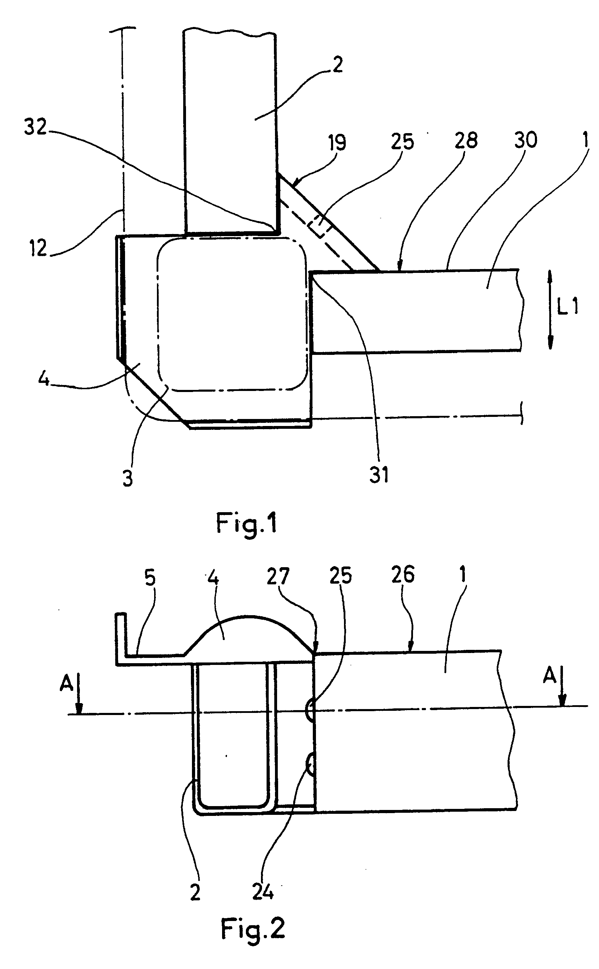

Dans le mode de réalisation représenté sur les figures 1 à 5, l'assemblage de coin selon la présente invention permet de relier un premier tube d'encadrement 1, un deuxième tube d'encadrement 2 et un tube de pied 3 au moyen d'une pièce de raccordement 4, les tubes ayant des sections rectangulaires.

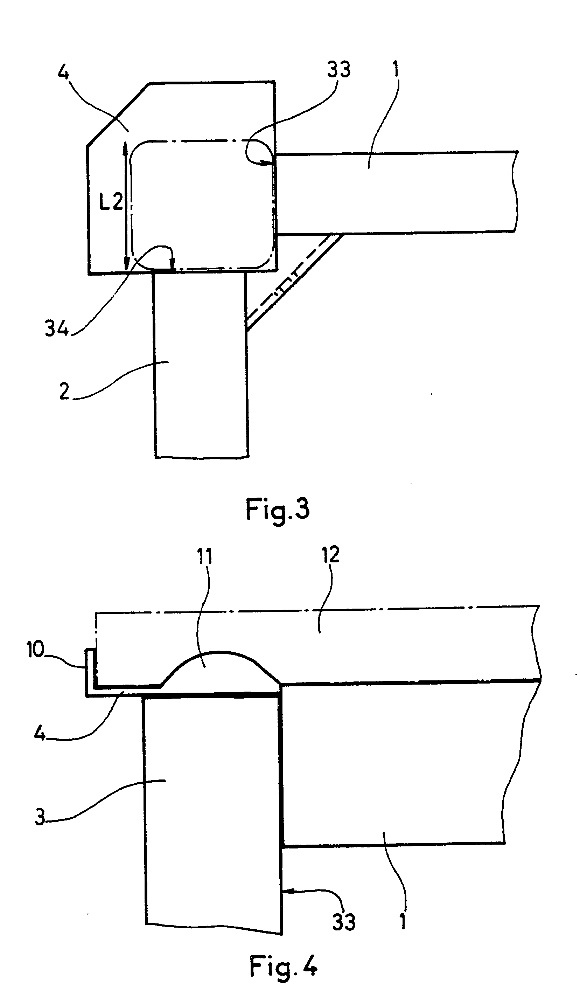

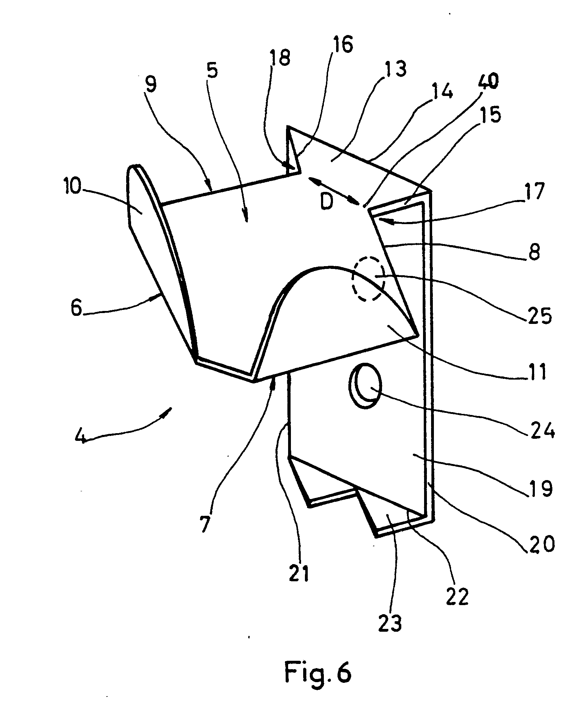

La pièce de raccordement 4, représentée sur la figure 6, est une pièce réalisée par découpage et pliage d'une feuille métallique. Elle comprend un plateau supérieur 5, de forme générale carrée délimité par 4 bords principaux, 2 bords extérieurs 6 et 7, 2 bords intérieurs 8 et 9. Le plateau supérieur 5 est replié vers le haut le long de son bord supérieur 6 pour former un premier taquet d'arrêt 10. De manière similaire, le plateau supérieur 5 est replié vers le haut le long de son bord extérieur 7 pour former un second taquet d'arrêt 11. Les taquets d'arrêt 10 et 11 sont perpendiculaires l'un par rapport à l'autre, et définissent une structure en coin pour le blocage d'un angle du plateau de découpe 12, représenté sur les figures 1 et 4 en traits mixtes. A l'opposé des taquets 10 et 11, le plateau supérieur 5 se raccorde selon la zone de jonction 40 à une tablette 13 délimitée par une arête intérieure oblique 14 et deux côtés de tablette 15 et 16. Le côté de tablette 15 est perpendiculaire au bord intérieur 8 du plateau supérieur 5. Le côté de tablette 16 est perpendiculaire au bord intérieur 9 du plateau supérieur 5. Le bord intérieur 8 et le côté de tablette 15 correspondant définissent une première découpe à angle droit 17. Le bord intérieur 9 et le côté de tablette 16 correspondant définissent une seconde découpe à angle droit 18.

La tablette supérieure 13 se raccorde, par l'arête intérieure oblique 14, à une paroi d'assemblage verticale oblique 19, de forme sensiblement rectangulaire, et limitée par 2 bords verticaux 20 et 21. Le bord inférieur 22 de la paroi d'assemblage 19 est replié pour former un replat inférieur 23. La paroi d'assemblage 19 est percée de trous d'assemblage, par exemple un trou 24, ou deux trous 24 et 25.

Pour réaliser un cadre de chassis de table de découpe selon la présente invention, on dispose 4 tubes d'encadrement tels que les tubes 1 et 2 selon une forme rectangulaire, et on les assemble à chaque coin par 4 pièces de raccordement telles que la pièce 4. Chaque assemblage de coin est identique aux autres, et l'on comprendra qu'il suffit de décrire un seul assemblage de coin, en relation avec les figures 1 à 5.

Selon le mode de réalisation représenté, la pièce de raccordement 4 est destinée à être solidarisée à 2 tubes d'encadrement 1 et 2 adjacents présentant chacun une section rectangulaire. Les extrémités des tubes d'encadrement sont coupées à angle droit, comme le représentent les figures. Les tubes d'encadrement tels que le tube 1 présentent une largeur L1 inférieure à la longueur du bord intérieur 8 de plateau supérieur 5. La paroi d'assemblage 19 a de préférence une hauteur égale à la hauteur des tubes d'encadrement tels que le tube 1. Lors de l'assemblage du cadre, la face supérieure 26 du tube d'encadrement 1 est positionnée dans le plan du plateau supérieur 5. Le bord antérieur 27 de la face supérieure 26 est en appui sur le bord intérieur 8 du plateau supérieur 5, tandis que le bord intérieur 28 de la face supérieure 26 est en appui contre le côté 15 de tablette. On réalise ainsi une liaison bord à bord. Simultanément, le bord vertical 20 de la paroi d'assemblage 19 est en appui contre la paroi intérieure 30 du tube d'encadrement 1, et le replat inférieur 23 présente également une arête en appui contre la même paroi 30 du tube d'encadrement. La pièce de raccordement 4 est alors solidarisée au tube d'encadrement 1 par soudure le long du bord antérieur 27 du tube, le long du côté 15 de tablette, le long du bord vertical 20 de paroi d'assemblage 19, et le long du côté de replat inférieur 23.

Bien entendu, on solidarise de manière similaire le tube d'encadrement 2 en le soudant le long du bord intérieur 9, le long du côté 16 de tablette, le long du bord vertical 21, et le long du second côté du replat inférieur 23. On constate qu'un tel assemblage est particulièrement rigide et résistant, tout en présentant des longueurs de soudure relativement faibles, les soudures pouvant être effectuées dans de bonnes conditions d'accès.

On remarque que les découpes à angle droit 17 et 18 sont distantes l'une de l'autre d'une distance D, ou largeur de la zone de jonction 40, définissant un écartement entre les arêtes intérieures 31 et 32 des deux tubes d'encadrement 1 et 2. Cet écartement permet le passage de vis dans les trous 24 et 25 comme cela sera expliqué plus loin. Cet écartement permet aussi la jonction entre la tablette 13 et le plateau supérieur 5.

Le tube de pied 3 selon l'invention présente avantageusement une section carrée, dont les côtés ont une longueur L2 plus grande que la largeur L1 des tubes d'encadrement. De cette façon, le tube de pied 3 définit deux surfaces planes d'appui 33 et 34 destinées à venir porter contre les extrémités à angle droit des tubes d'encadrement 1 et 2, et à les obturer totalement. Cette disposition permet d'éviter l'apparition d'interstices entre les extrémités des tubes d'encadrement 1 et 2 et le tube de pied 3.

L'extrémité supérieure du tube de pied 3 est coupée à angle droit. Lors de l'assemblage, elle vient porter en appui sous la face inférieure du plateau supérieur 5 de la pièce de raccordement 4, tandis que les surfaces d'appui 33 et 34 du tube de pied 3 portent en appui contre les extrémités respectives des tubes d'encadrement 1 et 2.

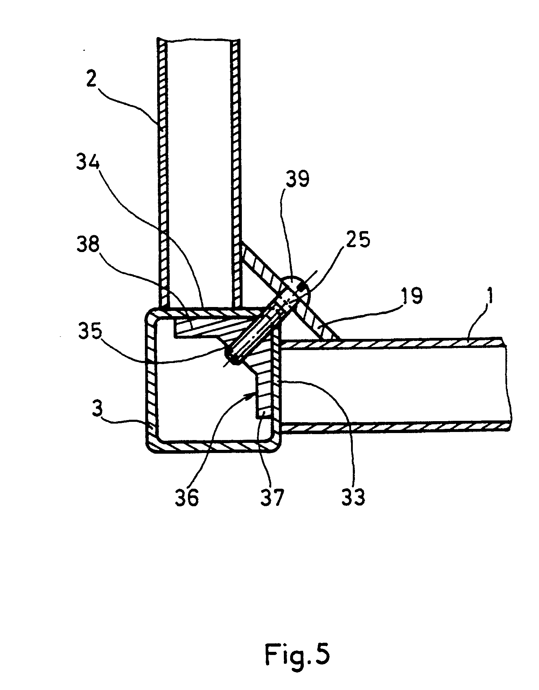

De préférence, le tube de pied 3 est fermé à son extrémité supérieure par un embout comportant une partie 36 pénétrant à l'intérieur du tube de pied. La partie pénétrante 36, représentée sur la figure 5, comprend des alésages taraudés tels que l'alésage 35, disposés en correspondance des trous tels que le trou 25 de la plaque d'assemblage 19. La partie pénétrante 36 comprend également deux parois rectangulaires 37 et 38 venant en appui contre les faces intérieures des deux parois d'appui 33 et 34 du tube de pied 3. Les parois 37 et 38 rigidifient les parois 33 et 34 du tube, et contribuent à supporter l'effort de maintien des extrémités des tubes d'encadrement 1 et 2. La partie pénétrante 36 de l'embout permet en outre l'assemblage et la solidarisation du tube de pied 3 sur la pièce de raccordement 4, par insertion de vis telles que la vis 39 dans les trous 25 de la paroi d'assemblage 19 et dans les alésages 35 de la partie pénétrante 36 de l'embout. Des trous correspondants sont pour cela prévus dans les parois du tube de pied 3, comme le représentent les figures.

L'effort de serrage oblique de la vis 39 applique fortement les surfaces d'appui 33 et 34 du tube de pied contre les extrémités des tubes d'encadrement. Un tel serrage contribue sensiblement à rigidifier l'ensemble et à empêcher l'apparition d'interstices entre le tube de pied et les tubes d'encadrement. L'utilisateur est incité de façon naturelle, par la conformation de l'assemblage de la présente invention, à serrer suffisamment la vis 39 lors de l'adaptation du tube de pied 3 sur un coin de cadre, jusqu'à éviter toute oscillation du tube de pied par rapport au cadre. Lors de ce serrage, les efforts s'équilibrent d'eux-mêmes entre les parois d'appui 33 et 34 et les extrémités correspondantes des tubes d'encadrement 1 et 2. Le fait que les parois d'appui 33 et 34 sensiblement planes portent contre les extrémités creuses des tubes d'encadrement tend à déformer légèrement les parois d'appui 33 et 34 et à réaliser un assemblage particulièrement rigide.

Bien que les modes de réalisation qui ont été représentés sur les dessins concernent un assemblage de coin pour des tubes d'encadrement et de pied à section rectangulaire, l'invention s'applique également à des assemblages de coin pour des tubes à section non rectangulaire, par exemple des tubes à section ronde. On peut par exemple envisager un assemblage de tubes d'encadrement à section ronde, avec un tube de pied à section carrée. Les bords latéraux 20 et 21 de la paroi oblique d'assemblage doivent être alors conformés en ellipses, pour s'adapter sur les faces intérieures des tubes d'encadrement. Les bords de la tablette supérieure 13 et du plateau supérieur 5 adjacents aux tubes d'encadrement doivent également avoir une forme adaptée à la zone de jonction. De préférence, les extrémités des tubes d'encadrement à section ronde sont également coupées à angle droit, et viennent en appui contre les faces latérales planes du tube de pied à section carrée.

Dans le cas d'un tube de pied à section carrée, les extrémités des tubes d'encadrement peuvent avantageusement être conformées en creux pour s'adapter sur la face latérale du tube de pied.

## Revendications

1. Assemblage de coin pour chassis tubulaire de table de découpe, comprenant
   - deux tubes d'encadrement (1, 2) disposés à angle droit,
   - un tube de pied (3) amovible perpendiculaire aux tubes d'encadrement,
   - une pièce de raccordement (4) des deux tubes d'encadrement, cette pièce de raccordement comportant une tablette supérieure (13) délimitée par une arête intérieure (14) oblique et deux côtés (15, 16) perpendiculaires l'un à l'autre,
   - la tablette supérieure (13) de la pièce de raccordement (4) se raccordant, par l'arête intérieure oblique (14), à une paroi d'assemblage (19) verticale oblique dont les bords latéraux (20, 21) sont conformés pour épouser la forme des parois latérales intérieures des tubes d'encadrement (1, 2) contre lesquelles ils sont en appui,
   - la paroi d'assemblage (19) comprenant au moins un trou (24, 25) pour le passage de vis d'assemblage (39) obliques destinées à pénétrer dans un alésage taraudé (35) du tube de pied,
   - la pièce de raccordement (4) constituant une structure sur laquelle sont solidarisées les extrémités des tubes d'encadrement (1, 2), et sur laquelle se rapporte de manière amovible et blocable l'extrémité du tube de pied (3), caractérisé en ce que :
   - les arêtes intérieures (31, 32) des tubes d'encadrement sont écartées d'une distance (D) permettant le passage des vis d'assemblage (39) obliques traversant les trous (24, 25) de la paroi d'assemblage (19) et pénétrant dans l'alésage taraudé (35) du tube de pied,
   - dans la zone (40) opposée à l'arête intérieure oblique (14) définie par ladite distance (D), la tablette supérieure (13) se raccorde à un plateau supérieur (5) constituant une surface d'appui et d'obturation du tube de pied,
   - les tubes d'encadrement (1, 2) sont solidarisés par soudure à la tablette supérieure (13), au plateau supérieur (5), et aux bords latéraux (20, 21) de la paroi d'assemblage (19) de la pièce de raccordement (4).
   - l'extrémité supérieure du tube de pied (3) est coupée à angle droit et vient porter contre la face inférieure du plateau supérieur (5).

2. Assemblage de coin selon la revendication 1, caractérisé en ce que le plateau supérieur (5) et la tablette supérieure (13) de pièce de raccordement (4) se raccordent bord à bord et sont soudés selon leurs côtés respectifs correspondants (8, 9, 15, 16,) aux bords antérieurs (27) et intérieurs (28) des tubes d'encadrement (1, 2).

3. Assemblage de coin selon l'une des revendications 1 ou 2, caractérisé en ce que le tube de pied (3) a une largeur (L2) supérieure à la largeur (L1) des tubes d'encadrement, pour définir des surfaces d'appui (33, 34) obturant entièrement les extrémités des tubes d'encadrement (1, 2),

4. Assemblage de coin selon l'une quelconque des revendications 1 à 3, caractérisé en ce que les tubes d'encadrement (1, 2) et de pied (3) ont une section sensiblement rectangulaire et leurs extrémités sont coupées à angle droit.

5. Assemblage de coin selon l'une quelconque des revendications 1 à 4, caractérisé en ce que le plateau supérieur (5) comprend deux taquets d'arrêt (10, 11).

6. Assemblage de coin selon l'une quelconque des revendications 1 à 5, caractérisé en ce que la pièce de raccordement (4) est réalisée à partir d'une feuille métallique découpée et pliée.

7. Assemblage de coin selon l'une quelconque des revendications 1 à 6, caractérisé en ce que la pièce de raccordement (4) comprend un replat inférieur (23) de fermeture.

8. Assemblage de coin selon l'une quelconque des revendications 1 à 7, caractérisé en ce que l'extrémité supérieure du tube de pied (3) reçoit un embout dont une partie (36) pénètre dans le tube, la partie pénétrante étant munie d'alésages taraudés (35) et présentant deux parois rectangulaires (37, 38) venant en appui contre les faces intérieures des deux parois d'appui (33, 34) du tube de pied, l'embout assurant ainsi la fonction d'organe d'assemblage pour recevoir les vis d'assemblage (39), et la fonction de renfort pour les parois du tube de pied dans la zone en appui contre les tubes d'encadrement.

9. Table de découpe caractérisée en ce qu'elle comprend au moins un assemblage de coin selon l'une quelconque des revendications 1 à 8.

## Ansprüche

1. Eckverbindung für das Rohrgestell eines Schneidtisches, mit

– zwei rechtwinklig angeordneten Rahmenrohren (1, 2),

– einem senkrecht zu den Rahmenrohren auswechselbar angeordneten Fußrohr (3),

– einem Verbindungsstück (4) für die beiden Rahmenrohre, wobei dieses Verbindungsstück eine obere Fläche (13) aufweist, die durch eine schräge Innenkante (14) und zwei senkrecht zueinander verlaufende Seiten (15, 16) begrenzt ist, wobei

– die obere Fläche (13) des Verbindungsstückes (4) über die schräge Innenkante (14) an eine vertikale schräge Verbindungswand (19) angeschlossen ist, deren Seitenränder (20, 21) für eine genaue Anpassung an die Form der inneren Seitenwände der Rahmenrohre (1, 2) ausgebildet sind, gegen welche sie abgestützt sind,

– die Verbindungswand (19) wenigstens ein Loch (24, 25) zum Durchstecken von schrägen Verbindungsschrauben (39) aufweist, die zum Einführen in eine Gewindebohrung (35) des Fußrohres bestimmt sind, und

– das Verbindungsstück (4) ein Bauteil bildet, über welches die Enden der Rahmenrohre (1, 2) vereinigt sind und über welches sich das Ende des Fußrohres (3) auswechselbar und verriegelbar anschließt, dadurch **gekennzeichnet**, daß

– die Innenkanten (31, 32) der Rahmenrohre in einem Abstand (D) voneinander beabstandet sind, der das Durchstecken der schrägen verbindungsschrauben (39) durch die Löcher (24, 25) der verbindungswand (19) und ihr Einführen in die Gewindebohrung (35) des Fußrohres erlaubt,

– in dem durch diesen Abstand (D) bestimmten Bereich (40) gegenüberliegend zu der schrägen Innenkante (14) die obere Fläche (13) an eine obere Platte (5) angeschlossen ist, die eine Abstütz- und Verschlußfläche für das Fußrohr bildet,

– die Rahmenrohre (1, 2) durch eine Schweißung mit der oberen Fläche (13), der oberen Platte (5) und den Seitenrändern (20, 21) der verbindungswand (19) des Verbindungsstückes (4) verbunden sind, und

– das obere Ende des Fußrohres (3) im rechten Winkel geschnitten ist und gegen die Unterseite der oberen Platte (5) anliegt.

2. Eckverbindung nach Anspruch 1, dadurch **gekennzeichnet**, daß die obere Platte (5) und die obere Fläche (13) des Verbindungsstückes (4) sich Kante an Kante anschließen und längs ihrer betreffenden Korrespondierenden Seiten (8, 9, 15, 16) mit den Oberkanten (27) und den Innenkanten (28) der Rahmenrohre (1, 2) verschweißt sind.

3. Eckverbindung nach einem der Ansprüche 1 oder 2, dadurch **gekennzeichnet**, daß das Fußrohr (3) eine Breite (L2) größer als die Breite (L1) der Rahmenrohre hat, womit Anlageflächen (33, 34) erhalten werden, welche die Enden der Rahmenrohre (1, 2) vollständig verschließen.

4. Eckverbindung nach einem der Ansprüche 1 bis 3, dadurch **gekennzeichnet**, daß die Rahmenrohre (1, 2) und das Fußrohr (3) einem im wesentlichen rechteckigen Querschnitt haben und ihre Enden rechtwinklig abgeschnitten sind.

5. Eckverbindung nach einem der Ansprüche 1 bis 4, dadurch **gekennzeichnet**, daß die obere Platte (5) mit zwei Halteanschlägen (10, 11) versehen ist.

6. Eckverbindung nach einem der Ansprüche 1 bis 5, dadurch **gekennzeichnet**, daß das Verbindungsstück (4) mit einem zugeschnittenen und gefalteten Metallbogen hergestellt ist.

7. Eckverbindung nach einem der Ansprüche 1 bis 6, dadurch **gekennzeichnet**, daß das Verbindungsstück (4) eine untere Schließplattform (23) aufweist.

8. Eckverbindung nach einem der Ansprüche 1 bis 7, dadurch **gekennzeichnet**, daß das obere Ende des Fußrohres (3) ein Ansatzstück aufnimmt, von dem ein Teil (36) in das Rohr einfaßt, wobei dieses einfassende Teil mit Gewindebohrungen (35) versehen ist und zwei rechteckige Wände (37, 38) aufweist, mit welchen eine Anlage an die Innenflächen der beiden Abstützwände (33, 34) des Fußrohres erhalten wird, so daß das Ansatzstück die Funktion des Verbindungsstückes zur Aufnahme der Verbindungsschrauben (39) erfüllt sowie auch die Funktion einer Verstärkung für die Wände des Fußrohres in dem Abstützbereich gegenüber den Rahmenrohren.

9. Schneidtisch, dadurch **gekennzeichnet**, daß wenigstens eine Eckverbindung nach einem der Ansprüche 1 bis 8 aufweist.

## Claims

1. Corner assembly for a tubular frame of a cutting table comprising

– two frame tubes (1, 2) disposed at right angles,

– a removable leg tube (3) perpendicular to the frame tubes,

– a connector (4) for the two frame tubes, the connector having an upper shelf section (13) delimited by an oblique inner edge (14) and two sides (15, 16) perpendicular to each other,

– the upper shelf section (13) of the connector (4) being joined by the oblique inner edge (14) to an oblique vertical assembly side wall (19), the lateral edges (20, 21) of which are conformed to marry with the lateral inner side walls of the frame tubes (1, 2) against which they are supported,

– the assembly side wall (19) comprising at least one hole (24, 25) for the passage of oblique assembly screws (39) arranged to penetrate into a threaded bore (35) of the leg tube,

— the connector (4) constituting a structure on which the ends of the frame tubes (1, 2) are solidly mounted and on which the end of the leg tube (3) is connected in a removable and lockable manner, characterised in that ;

— the inner edges (31, 32) of the frame tubes are separated by a distance (D) which permits the passage of the oblique assembly screws (39) through the holes (24, 25) of the assembly side wall (19) penetrating the threaded bore (35) of the leg tube,

— in the region (40) opposed to the oblique inner edge (14) and defined by the said distance (D), the upper shelf section (13) is connected to an upper plateau (5) which constitutes a support surface and obturation surface for the leg tube,

— the frame tubes (1, 2) are solidly joined to the upper shelf section (13), to the upper plateau (5) and to the lateral edges (20, 21) of the assembly side wall (19) of the connector (4),

— the upper end of the leg tube (3) is cut at a right angle and contacts with the lower surface of the upper plateau (5).

2. Corner assembly according to Claim 1, characterised in that the upper plateau (5) and the upper shelf section (13) of the connector (4) are connected side by side and their respective sides (8, 9, 15, 16) are joined to the corresponding front edges (27) and the inner edges (28) of the frame tubes (1, 2).

3. Corner assembly according to either one of Claim 1 or Claim 2, characterised in that the leg tube (3) has a width (L2) greater than the width (L1) of the frame tubes, in order to define supporting surfaces (33, 34) to entirely obturate the ends of the frame tubes (1, 2).

4. Corner assembly according to any one of Claims 1 to 3, characterised in that the frame tubes (1, 2) and leg tube (3) have a substantially rectangular section and their ends are cut at right angles.

5. Corner assembly according to any one of Claims 1 to 4, characterised in that the upper plateau (5) has two stops (10, 11).

6 Corner assembly according to any one of Claims 1 to 5, characterised in that the connector (4) is formed from a metal sheet which is cut out and bent.

7. Corner assembly according to any one of Claims 1 to 6, characterised in that the connector (4) comprises a lower closing flat section (23).

8. Corner assembly according to any one of Claims 1 to 7 characterised in that the upper end of the leg tube (3) receives a cap, a section (36) of which penetrates within the tube, the penetrating section being provided with the threaded bores (35) and having two rectangular side walls (37, 38) which supportingly contact the inner faces of the two side walls (33, 34) of the leg tube, the cap also fulfilling an assembly function by receiving the assembly screws (39) and a re-inforcing function for the side walls of the leg tube in the regions which support the frame tubes.

9. Cutting table characterised in that it comprises at least one corner assembly according to any one of Claims 1 to 8.

Fig.1

Fig.2

Fig.3

Fig.4

Fig.5

Fig. 6